# FASCICULE DE BREVET EUROPEEN

(11) **EP 3 144 742 B1**
(45) Date de publication et mention de la délivrance du brevet: **31.10.2018**
(21) Numéro de dépôt: 15185892.5
(22) Date de dépôt: 18.09.2015
(51) Int. Cl.: G04B 18/00, F16B 43/00, G04D 7/08, G04B 17/06

(54) **MICRO-REGLAGE D'INERTIE DE BALANCIER D'HORLOGERIE**
MIKROREGULIERUNG DER UNRUHTRÄGHEIT EINES UHRWERKS
INERTIA MICRO-ADJUSTMENT OF A TIMEPIECE BALANCE

(43) Date de publication de la demande: 22.03.2017
(73) Titulaire: ETA SA Manufacture Horlogère Suisse, 2540 Grenchen (CH)
(72) Inventeur: Conus, Thierry, 2543 Lengnau (CH); Villar, Ivan, 2555 Brügg (CH); Klinger, Laurent, 2503 Bienne (CH)
(74) Mandataire: Giraud, Eric

(56) Documents cités:
- EP-A2- 2 420 900
- CH-A- 279 673
- CH-A- 280 067
- CH-A- 312 348
- DE-C- 864 827
- JP-A- H0 642 514
- US-A- 2 798 748
- Anonymous: "Washers Information on GlobalSpec", , 26 avril 2015 (2015-04-26), XP055257273, Extrait de l'Internet: URL:https://web.archive.org/web/2015042617 3310/http://www.globalspec.com/learnmore/m echanical_components/mechanical_fasteners/ washers [extrait le 2016-03-10]
- Anonymous: "Washer (hardware) - Wikipedia, the free encyclopedia", , 4 juillet 2015 (2015-07-04), XP055257280, Extrait de l'Internet: URL:https://web.archive.org/web/2015070412 0843/https://en.wikipedia.org/wiki/Washer_ (hardware) [extrait le 2016-03-10]

## Description

### Domaine de l'invention

L'invention concerne un balancier d'horlogerie comportant, solidaire de sa serge ou d'une masselotte rapportée sur sa dite serge, au moins une tige s'étendant selon un axe de tige et apte à porter une rondelle d'équilibrage.

L'invention concerne une pièce d'horlogerie comportant au moins un tel balancier.

### Arrière-plan de l'invention

Les réglages d'équilibrage et d'inertie d'un balancier d'horlogerie conditionnent la fréquence d'oscillation et la régularité de la marche.

Traditionnellement ces réglages sont faits par déplacement de masselottes, vis, écrous, ou par déformation de bras du balancier. On connaît encore des ajouts de matière par imprimante à jet d'encre, ou, à l'inverse, des ablations de matière par laser, ou encore des déplacements de matière, comme dans les demandes EP11739016.1 et EP14173409.5 du même déposant. On connaît aussi des réalisations en silicium ou similaire, avec ou sans insert, comme dans les documents EP10170007.8 et EP11731310.6 de la Société NIVAROX-FAR.

La difficulté est double: l'atteinte de la valeur juste, en fonction du spiral auquel est associé le balancier, et la finesse de l'ajustement. On estime que, dans le meilleur des cas, un réglage de masselottes permet de régler la marche avec une précision de quelques dizaines de secondes par jour, ou au mieux de quelques secondes par jour par tour de vis/écrou pour deux ensembles vis/écrou traditionnels. De ce fait un réglage à la seconde/jour près reste très délicat, car cela ne représente que quelques degrés, voir dixièmes de degrés, sur un ensemble vis/écrou.

Le document CH 279673, qui montre le préambule de la revendication 1, au nom de ROLEX décrit un balancier avec des rondelles ressort sur des vis radiales réglables.

Le document DE 864 827 C au nom de JUNGHANS décrit des rondelles interposées sous des têtes de vis réglables radialement.

Le document CH 280 067 A au nom de PATEK PHILIPPE décrit un balancier avec des masselottes clipées sur des tourillons lisses, d'axes parallèles à celui du balancier.

Le document EP 2 420 900 A2 au nom de DAMASKO décrit des rondelles fendues, clipant des masselottes d'axes parallèles à celui du balancier, et comportant un centre de masse décalé radialement par rapport à leur axe.

Le document JP H06 42514 A au nom de KUBOTA MASAO décrit une rondelle conique fendue comportant des crans périphériques, pour la mécanique générale.

Le document XP055257273 décrit différents types de rondelles élastiques de mécanique générale.

### Résumé de l'invention

Pour affiner les possibilités de réglage, l'invention exploite un principe à rondelles rapportées a été pensé. Ces rondelles rapportées sont élaborées, de façon particulière, beaucoup plus légères que les vis connues, et ont donc une influence limitée sur l'inertie et donc sur la variation de marche. Il est alors possible d'avoir un système de réglage de l'ordre de quelques dixièmes de seconde/jour par tour de rondelle pour deux rondelles par exemple.

Ainsi, l'invention concerne un balancier d'horlogerie selon la revendication 1.

L'invention concerne une pièce d'horlogerie comportant au moins un tel balancier.

### Description sommaire des dessins

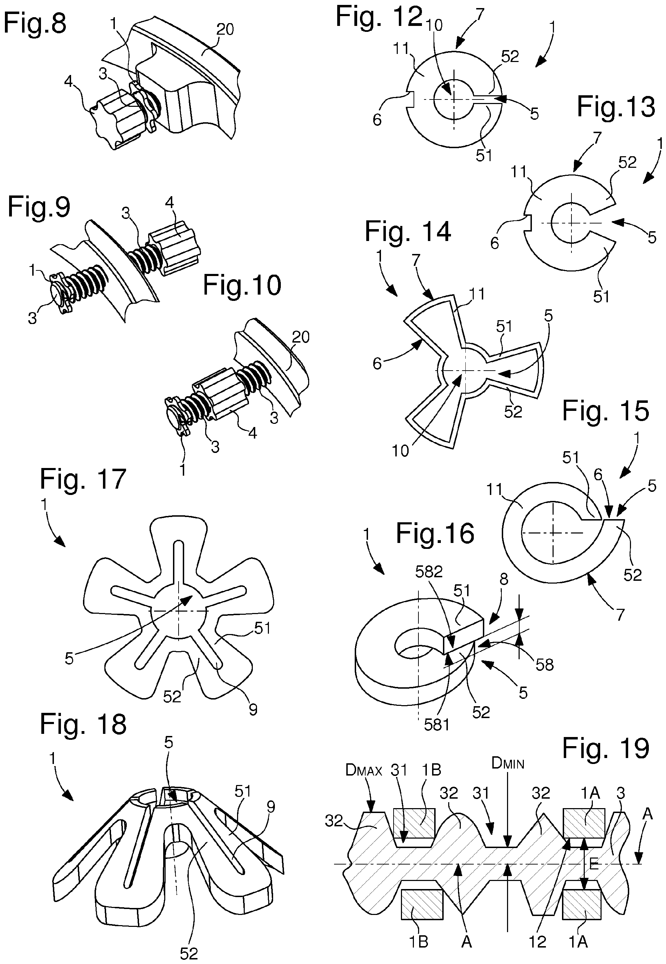

D'autres caractéristiques et avantages de l'invention apparaîtront à la lecture de la description détaillée qui va suivre, en référence aux dessins annexés, où :
- les figures 1 et 2 représentent, de façon schématisée et en vue en plan et de côté, une rondelle de micro-réglage selon une réalisation particulière de l'invention, où cette rondelle est plane à l'état libre ;
- la figure 3 représente, de façon schématisée, en perspective et en éclaté, une tige à relief et la rondelle de la figure 1 avant son montage sur cette tige à relief ;
- la figure 4 représente, de façon similaire à la figure 3, la rondelle montée en position contrainte et gauchie sur la tige à relief ;
- la figure 5 représente, de façon similaire à la figure 4, le sous-ensemble constitué par la rondelle montée sur la tige à relief, lui-même vissé dans un taraudage de la serge d'un balancier;
- les figures 6 et 7 représentent, de façon schématisée et en vue en plan et en coupe passant par son axe de pivotement, un tel balancier équipé de quatre tels sous-ensembles tige à relief/rondelle ;
- les figures 8 à 9 représentent, de façon analogue à la figure 5, différents positionnements relatifs de la masselotte d'équilibrage et de la rondelle selon l'invention par rapport à la serge du balancier :
   ∘ figure 8 : la rondelle est emprisonnée entre la serge et la masselotte ;
   ∘ figure 9 : la rondelle et la masselotte sont chacune sur un tronçon de tige à relief, de part et d'autre de la serge ;
   ∘ figure 10 : la masselotte est emprisonnée entre la serge et la rondelle ;
- la figure 11 représente, de façon schématisée, une montre comportant un balancier équipé de sous-ensembles tige à relief/rondelle selon l'invention ;
- les figures 12 à 18 représentent quelques exemples de rondelles selon l'invention, en plan ou en perspective dans le cas des figures 16 et 18 :
   ∘ figure 12 anneau fendu à fente droite, avec encoche de manoeuvre;
   ∘ figure 13 anneau fendu à fente évasée, avec encoche de manoeuvre ;
   ∘ figure 14 : en marguerite à trois branches creuses ;
   ∘ figure 15 : en escargot ;
   ∘ figure 16 : en escargot et en tronçon d'hélice ;
   ∘ figure 17 : en marguerite à cinq branches fendues ;
   ∘ figure 18 : en marguerite conique à cinq branches fendues
- la figure 19 représente, de façon schématisée, et en coupe longitudinale, un exemple théorique de tige à relief avec alternance de profils creux et de sommets de forme quelconque, entre lesquels sont pincées deux rondelles selon l'invention ;

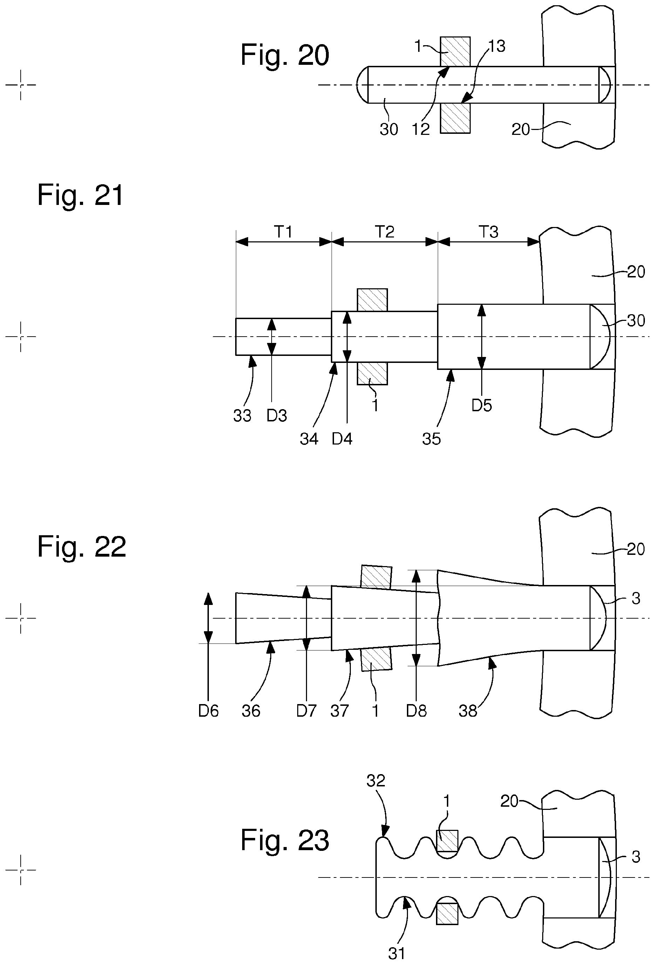

- la figure 20 représente une variante de balancier équipé d'une tige lisse sur laquelle est pincée une rondelle selon l'invention ;
- la figure 21 représente une autre variante de balancier équipé d'une tige dite lisse comportant trois portées lisses de diamètres différents, correspondant chacune à une plage de correction, sur l'une desquelles est pincée une rondelle selon l'invention ;
- la figure 22 représente une autre variante encore de balancier équipé d'une tige dite lisse comportant trois portées coniques sensiblement parallèles et s'étageant entre des diamètres différents, correspondant chacune à une plage de correction, sur l'une desquelles est pincée une rondelle selon l'invention ;
- la figure 23 représente une variante de balancier équipé d'une tige annelée sur laquelle est pincée une rondelle selon l'invention.

### Description détaillée des modes de réalisation préférés

L'invention concerne une rondelle d'équilibrage 1, agencée pour son maintien sur une tige 3 ou 30, que comporte un balancier 2 d'horlogerie ou une masselotte 4 rapportée sur un tel balancier 2.

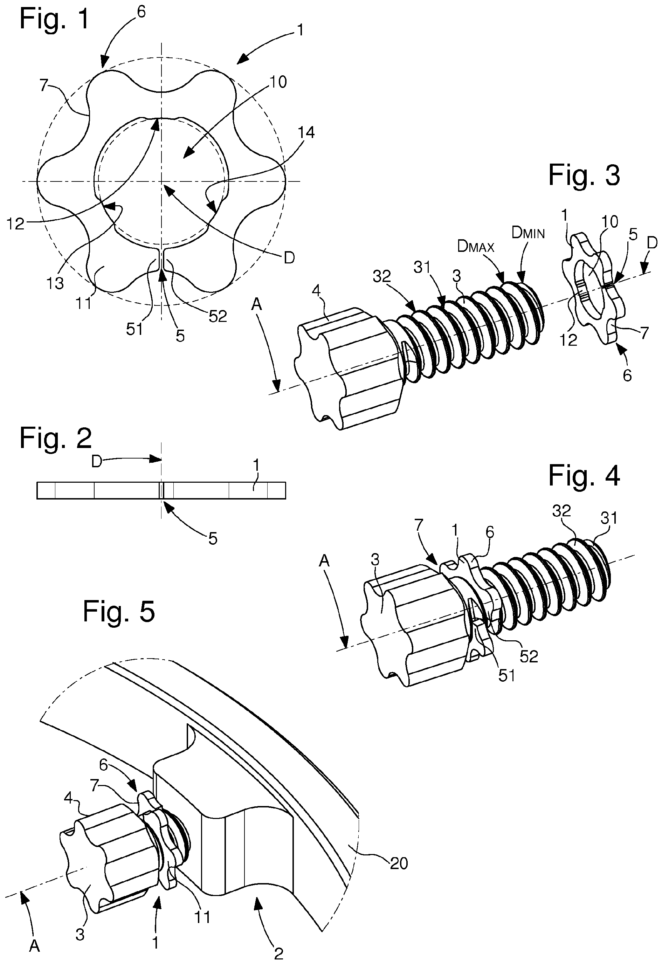

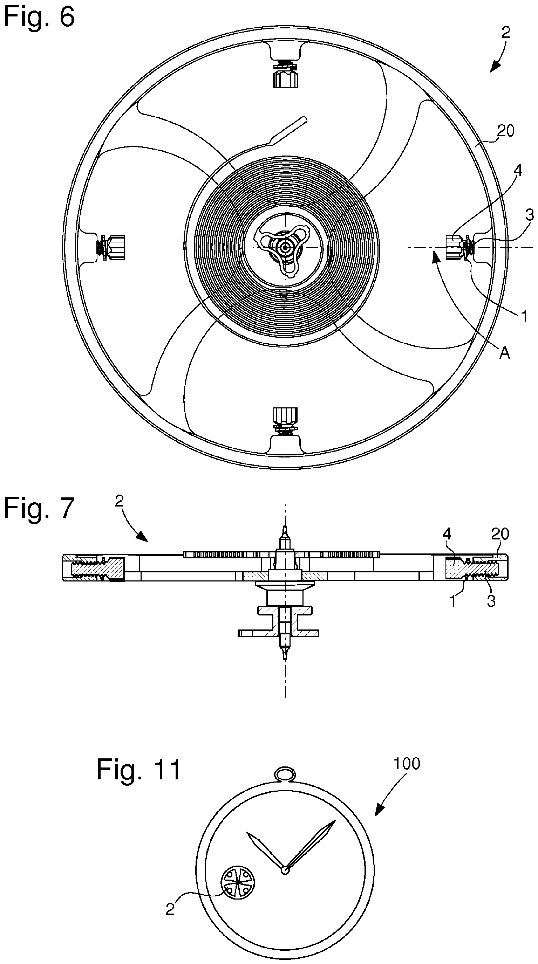

Cette tige peut être de différents types : les figures 1 à 19 et 23 concernent une tige à relief 3, tandis que les figures 20 à 22 illustrent une tige lisse 30, qui sera exposée plus loin.

Par « tige à relief », on entend ici une tige sensiblement linéaire, qui s'étend selon un axe de tige A, et comporte une succession de profils creux 31 séparés par des sommets 32. Elle peut être une tige filetée, une tige annelée, ou encore avoir un profil plus quelconque comme sur la figure 19.

Selon l'invention, la rondelle 1 est une rondelle élastique sensiblement annulaire, autour d'un orifice 10 agencé pour entourer au moins partiellement une telle tige à relief 3, et comporte au moins une jupe 11 élastique, laquelle est agencée pour autoriser une introduction ou une extraction de cette rondelle 1 par rapport à une tige à relief 3 correspondante sous l'action d'un effort radial ou/et axial, et pour assurer un maintien clipé sur cette tige à relief 3 en l'absence d'effort sur la rondelle 1. Et cette rondelle 1 comporte un moyen de préhension ou/et d'indexage angulaire 6, étoile, encoche, tenon, ou similaire, situé sur un chant 7 périphérique que comporte cette rondelle 1, de façon à permettre un ajustement par un outil manuel ou robotisé.

La rondelle 1 est sensiblement annulaire autour de l'orifice 10 autour d'un axe de rondelle D.

La jupe 11 élastique assure de préférence ce maintien clipé avec un couple de pincement qui est supérieur à une valeur seuil prédéterminée VSC.

Dans une exécution simple et économique, convenant bien à une fabrication en micro-usinage de type « Liga » ou « MEMS », la rondelle 1 est sensiblement plane.

Dans les réalisations illustrées, non limitatives, la rondelle 1 comporte au moins une ouverture 5 qui est sensiblement radiale par rapport à l'axe de rondelle D, et délimitée par une première lèvre 51 et une deuxième lèvre 52. L"écartement à l'état libre entre ces deux lèvres 51 et 52 est inférieur à la plus petite dimension radiale de la tige à relief 3 avec laquelle la rondelle 1 est agencée pour coopérer. Au moins l'une de la première lèvre 51 et de la deuxième lèvre 52 est une lèvre élastique. L'ouverture 5 est agencée pour autoriser une introduction ou une extraction axiale ou/et radiale, par rapport audit axe de tige A, sous l'action d'un effort axial ou/et radial par rapport à l'axe de tige A, de la rondelle 1 par rapport à cette tige à relief 3.

Une introduction radiale est avantageuse quand, dans une configuration selon la figure 5, le balancier 2 est déjà équipé d'une masselotte 4, soit fixée sur une tige à relief 3, soit comportant une tige à relief 3 et fixée sur la serge 20 du balancier, ou sur un de ses bras, et on souhaite insérer la rondelle 1 de micro-ajustement entre la masselotte 4 et le balancier 2, sans modifier la position de la masselotte 4.

Une insertion axiale permet une séquence d'assemblage simple, illustrée par les figures 3 à 5 : on équipe tout d'abord une tige à relief 3 (comportant ici, non limitativement, une masselotte 4) d'une rondelle 1, et on assemble ce sous-ensemble avec le balancier.

La simplicité d'insertion d'une telle rondelle fendue radialement autorise une grande souplesse d'utilisation. En particulier, il est possible d'équiper une même tige à relief 3 d'une pluralité de rondelles 1.

Les figures 1 à 13 illustrent une fente radiale unique, qui peut être délimitée par des faces parallèles tel que visible sur les figures 1 et 12, ou bien par des surfaces latérales définissant un point dur comme en figure 13. Ces figures ne sont pas limitatives, des formes très variées étant utilisables pour de telles rondelles.

La figure 15 montre un autre exemple avec une rondelle plane en escargot, qui présente un seuil ponctuel à l'état libre.

La figure 16 est une version gauche de rondelle en escargot, assimilable à une portion d'hélice, qui peut se développer sur plus d'un tour complet comme sur l'exemple de la figure. La rondelle 1 est alors gauche, et comporte au moins une spire ouverte 8 élastique s'enroulant autour de l'axe de rondelle D, et elle est agencée pour autoriser une introduction ou une extraction axiale, par rapport à l'axe de tige A, sous l'action d'un effort axial par rapport à cet axe de tige A, de la rondelle 1 par rapport à la tige à relief 3. Plus particulièrement, au moins une telle spire ouverte 8 comporte une ouverture de spire 58, sensiblement radiale par rapport à l'axe de rondelle D et délimitée par une première lèvre de spire 581 et une deuxième lèvre de spire 582 d'écartement à l'état libre inférieur à la plus petite dimension radiale de la tige à relief 3. L'une au moins de ces première lèvre 581 et deuxième lèvre 582 est une lèvre élastique, ainsi cette ouverture de spire 58 est agencée pour autoriser une introduction ou une extraction radiale, par rapport à l'axe de tige A, de la rondelle 1 par rapport à la tige à relief 3, sous l'action d'un effort radial par rapport à l'axe de tige A.

Les figures 14 et 17 illustrent d'autres variantes imperdables, c'est-à-dire que leur extraction radiale est impossible, où la rondelle 1 est sensiblement plane, et où sa jupe 11 comporte une pluralité de fentes 9 sensiblement radiales par rapport à l'axe de rondelle D. Ces fentes 9 sont de préférence chacune de largeur très inférieure à la plus petite dimension radiale de la tige à relief 3, de façon à s'opposer à toute introduction ou extraction radiale de la rondelle 1 par rapport à l'axe de tige A sous l'action d'un effort radial ou axial par rapport à cet axe de tige A. Cette pluralité de fentes 9 est alors agencée pour permettre une déformation élastique sensiblement conique de la jupe 11 sous l'action d'un effort axial par rapport à l'axe de tige A, pour autoriser une introduction ou une extraction axiale, par rapport à l'axe de tige A, de la rondelle 1 par rapport à la tige à relief 3 concernée.

La figure 18 est une variante gauche, de type parapluie, de la variante de la figure 17. Sa jupe 11 est sensiblement de symétrie de révolution par rapport à l'axe de rondelle D, et comporte une pluralité de fentes 9 sensiblement radiales par rapport à l'axe de rondelle D, et chacune de largeur très inférieure à la plus petite dimension radiale de la tige à relief 3, de façon à s'opposer à toute introduction ou extraction radiale de la rondelle 1 par rapport à l'axe de tige A sous l'action d'un effort radial ou axial par rapport à cet axe de tige A. La pluralité de fentes 9 est agencée pour permettre une déformation élastique conique de la jupe 11 sous l'action d'un effort axial par rapport à l'axe de tige A, pour autoriser une introduction ou une extraction axiale, par rapport à cet axe de tige A, de la rondelle 1 par rapport à la tige à relief 3.

Dans une variante particulière non illustrée, la rondelle 1 est gauche quand elle est prévue pour coopérer avec une tige à relief 3 filetée, selon un profil sensiblement hélicoïdal de même sens que ladite tige à relief 3 filetée, avec un pas différent de celui de la tige à relief 3 filetée concernée, et compris entre 0,80 et 1,20 fois la valeur du pas de cette tige à relief 3 filetée, et de préférence compris entre 0,80 et 0,90 fois, ou entre 1,10 et 1,20 fois cette valeur.

Avantageusement, l'orifice axial 10 est délimité latéralement par au moins deux surfaces opposées 12, 13, 14, qui, quand la rondelle 1 est prévue pour coopérer avec une tige à relief 3 filetée, définissent, dans chaque plan passant par l'axe de rondelle D, un profil sensiblement complémentaire à celui de cette tige à relief 3 filetée, par exemple un profil en développante, ou tronconique, ou similaire.

Dans un cas particulier, l'orifice axial 10 est un alésage axé sur l'axe de rondelle D et est délimité latéralement par de telles surfaces opposées 12, 13, 14, qui sont perpendiculaires à l'axe de rondelle D, et qui sont de préférence réparties uniformément sur la circonférence de l'orifice 10.

Dans une autre variante particulière au moins une de ces surfaces opposées 12, 13, 14, est agencée pour exercer une friction sur la tige à relief 3, par un état de surface supérieur à 12 micromètres Ra, ou/et par un traitement de surface particulier, notamment dans un cas particulier un revêtement de friction avec un coefficient de friction avec l'acier supérieur à 0,4.

On comprend que l'invention est conçue pour affiner le réglage classique d'inertie fait au moyen de masselottes 4, et que les rondelles 1 selon l'invention ont pour fonction de constituer des valeurs en quelque sorte décimales des valeurs d'inertie déterminées par la mise en position des masselottes.

Dans un exemple particulier, une rondelle 1, telle que représentée à la figure 1, avec un diamètre hors tout de 0,60 mm et un diamètre d'orifice de l'ordre de 0,3 mm, une épaisseur de 0,05 mm, une masse de 50 µg environ, réalisée en « Liga-nickel », permet un réglage de 0,9 seconde par tour de rondelle, pour un balancier 2 de forte inertie (environ 20 mg*cm²), ce qui fait de la rondelle 1, facilement réglable au sixième de tour, un système environ trente fois plus sensible que des vis de réglage. Le choix de ce matériau lui permet de tolérer, pour la géométrie de la figure 1, une expansion diamétrale au moins égale à son épaisseur, et pouvant atteindre une fois et demi son épaisseur, et pouvant notamment atteindre environ 15% de la valeur du diamètre intérieur. L'invention permet donc un réglage à la fois fin, précis, avec une rondelle 1 unique facilement déplaçable, à la fois en translation et en rotation, sur la tige à relief 3, surtout quand celle-ci est une tige filetée.

L'utilisateur peut néanmoins juxtaposer plusieurs rondelles 1 sur une même tige à relief 3. Dans une variante particulière, il peut aussi les mettre en contact et les entraîner l'une avec l'autre, réalisant ainsi une rondelle composée de masse supérieure. Dans ce but, et dans une variante, la rondelle 1 comporte, sur au moins une surface latérale sensiblement orthogonale à l'axe de rondelle D, au moins un moyen d'entraînement ou un crantage agencé pour coopérer avec un moyen d'entraînement complémentaire ou un crantage complémentaire, que comporte une autre rondelle 1 adjacente, pour un arrêt en pivotement par rapport à cette dernière.

Dans une variante particulière, l'orifice 10 de la rondelle 1 est cranté, ou est cannelé, ou comporte un état de surface supérieur à 12 micromètres Ra, ou comporte un revêtement de friction avec un coefficient de friction avec l'acier supérieur à 0,4.

Dans une variante particulière, la rondelle 1 a une masse inférieure à 50 µg. En combinaison avec une course linéaire de quelques dixièmes de millimètres sur la tige à relief 3, cette valeur s'avère suffisante pour un ajustement fin de l'inertie. Quand la tige à relief 3 est une tige filetée, dans un cas préféré illustré par les figures, le profil périphérique 6, en étoile ou similaire, procure une grande sensibilité et permet un véritable micro-réglage, puisqu'on peut ainsi descendre bien en-dessous de l'objectif de la seconde par jour pour la régulation de la marche, avec un pas d'ajustement de 0,1 à 0,2 seconde par jour environ.

Dans une variante particulière, la rondelle 1 a et une inertie propre par rapport à l'axe de rondelle D inférieure à 2,5µg*mm².

Avantageusement, la rondelle 1, qui est de très petites dimensions et doit posséder de bonnes propriétés élastiques en même temps qu'une bonne tenue dans le temps, est en matériau micro-usinable ou en silicium ou oxyde de silicium ou DLC.

L'invention concerne encore un balancier d'horlogerie 2 comportant, solidaire de sa serge 20, ou encore d'un bras ou d'une autre partie du balancier 2, ou d'une masselotte 4 rapportée sur le balancier 2, notamment sur sa serge 20, au moins une tige à relief 3 s'étendant selon un axe de tige A. plus particulièrement cette tige à relief 3 est filetée ou annelée ou comporte une succession de profils creux 31 séparés par des sommets 32, et s'étend diamétralement entre, d'une part un diamètre minimal DMIN de noyau, et d'autre part un diamètre maximal DMAX de sommet de profil.

Selon l'invention, sur ce balancier 2, au moins deux tiges à relief 3 sont chacune agencée pour recevoir au moins une telle rondelle 1, adaptée à son profil et à son diamètre minimal DMIN de noyau et à son diamètre maximal DMAX de sommet de profil.

Dans une variante particulière, au moins une tige à relief 3 est une vis hélicoïdale.

Dans une variante particulière, au moins une tige à relief 3 est un arbre annelé, tel que visible sur la figure 23.

Les tiges à relief 3, montées radialement par rapport à l'axe du balancier, ont un double avantage :
- le passage rapide d'une rondelle 1, en jouant uniquement sur son élasticité, et sans la faire tourner par rapport à son axe D, permet d'obtenir rapidement un réglage demi-fin de la marche, de l'ordre de la seconde par jour ou de quelques secondes par jour selon l'agencement de la tige à relief 3, et
- l'ajustement fin, de l'ordre du dixième de seconde par jour, est réalisable par rotation de la rondelle autour de son axe D qui est alors sensiblement confondu avec l'axe A de la tige 3.

Bien sûr, d'autres agencements qu'un agencement radial sont réalisables, par exemple tangentiels, mais sont alors plutôt utilisables pour un déplacement du centre d'inertie du balancier équipé.

Les caractéristiques de pincement des rondelles 1 élastiques selon l'invention les rendent aussi utilisables pour d'autres types de tiges, en particulier des tiges comportant des portées lisses, qu'on appellera ici des tiges lisses 30.

Le couple de pincement des rondelles 1 autorise leur maintien sur des portées lisses, ce maintien peut être amélioré par un traitement superficiel de l'intérieur de la rondelle 1, au niveau de l'orifice 10, notamment un alésage, et des surfaces d'appui 12, 13, 14, ou similaires. Un tel traitement est alors choisi pour ses propriétés de friction, et la création d'un effort résistant s'opposant notamment à la force centrifuge lorsque le balancier oscille. La tige lisse 30 correspondante peut avantageusement recevoir un traitement similaire.

La figure 20 représente une variante de balancier équipé d'une tige lisse 30, cylindrique, sur laquelle est pincée, par au moins deux surfaces 12, 13, une rondelle 1 selon l'invention.

La figure 21 représente une autre variante de balancier équipé, selon une radiale du balancier, d'une tige lisse 30 comportant trois portées lisses 33, 34, 35, coaxiales, de diamètres différents, D3, D4, D5, et correspondant chacune à une plage de correction, P1, P2, P3, et sur l'une desquelles est pincée une rondelle 1 selon l'invention, de capacité d'expansion adéquate. Chaque plage de correction P1, P2, P3, correspond à une amplitude de réglage de marche connue, par exemple de deux secondes par jour, et l'opérateur effectuant le réglage peut rapidement et facilement passer d'une plage à l'autre pour effecteur un réglage semi-fin.

De façon similaire, la figure 22 représente une autre variante encore de balancier équipé, selon une radiale du balancier, d'une tige lisse 30 comportant trois portées coniques 36, 37, 38, coaxiales, sensiblement parallèles et s'étageant entre des diamètres différents D6, D7, D8, correspondant chacune à une plage de correction, sur l'une desquelles est pincée une rondelle 1 selon l'invention, qui est alors choisie pour sa capacité d'expansion, pour pincer indifféremment chacune des portées, avec un couple de pincement suffisant. La forme conique présente l'avantage de s'opposer à la perte de la rondelle 1, une fois qu'elle est pincée sur une des portées.

L'invention est conçue pour un réglage extrêmement fin de la marche, et de ce fait les rondelles 1 sont nécessairement dimensionnées avec une très faible inertie et un petit encombrement. On peut toutefois noter que leur principe de construction est utilisable aussi pour des macro-réglages d'inertie, et que de telles rondelles peuvent alors être fixées sur un bras, voire sur la serge, du balancier. On comprend qu'il y a peu de limitations aux formes que peut prendre la rondelle 1, par exemple un simple U en fil élastique ou en liga, ou similaire, peut être utilisé dans toutes les applications décrites ci-dessus.

Le principe de telles rondelles élastiques est très avantageux, car il combine petites dimensions, bon maintien, et facilité de réglage. Un autre exemple d'application est l'utilisation d'une rondelle 1 de forme gauche, insérée à force dans une rainure ou dans une gorge.

L'invention concerne encore une pièce d'horlogerie 100, comportant au moins un tel balancier 2

En somme, l'invention permet, à peu de frais, et en utilisant des balanciers et masselottes existants, d'effectuer des micro-réglages de marche avec précision et rapidité.

L'invention permet aussi d'intervenir facilement lors de l'étape d'emboîtage d'un mouvement, qui altère chroniquement le réglage de la marche : l'opérateur peut accéder par le dessus ou le dessous, et procéder facilement au réglage en manipulant le moyen de préhension ou/et d'indexage angulaire 6, situé sur un chant 7 périphérique de la rondelle, avec une grande précision au niveau du réglage de la marche.

## Revendications

1. Balancier d'horlogerie (2) comportant, solidaires de sa serge (20) ou d'une masselotte (4) rapportée sur sa dite serge (20), au moins deux tiges (3, 30), à relief (3) ou lisses (30), s'étendant selon un axe de tige (A), où les dites tiges (3, 30) sont chacune agencée pour recevoir au moins une rondelle d'équilibrage (1), adaptée à son profil et à ses dimensions, ladite rondelle d'équilibrage (1) étant agencée pour son maintien sur une dite tige (3, 30), ladite rondelle (1) étant une rondelle élastique sensiblement annulaire autour d'un orifice (10) agencé pour entourer au moins partiellement une dite tige (3, 30), **caractérisé en ce que** ladite rondelle comporte au moins une jupe (11) élastique agencée pour autoriser une introduction ou une extraction de ladite rondelle (1) par rapport à une dite tige (3, 30) sous l'action d'un effort radial ou/et axial, et pour assurer un maintien clipé sur une dite tige (3, 30) en l'absence d'effort sur ladite rondelle (1), et ladite rondelle (1) comportant un moyen de préhension ou/et d'indexage angulaire (6) sur un chant (7) périphérique que comporte cette rondelle (1), chacune des tiges à relief (3) s'étendant selon un axe de tige (A) étant filetée ou annelée ou comportant une succession de profils creux (31) séparés par des sommets (32), et s'étendant diamétralement entre, d'une part un diamètre minimal (DMIN) de noyau, et d'autre part un diamètre maximal (DMAX) de sommet de profil, et chacune agencée pour recevoir au moins une dite rondelle (1), adaptée à son profil et à son dit diamètre minimal (DMIN) de noyau et à son dit diamètre maximal (DMAX) de sommet de profil.

2. Balancier d'horlogerie (2) selon la revendication 1, **caractérisée en ce que** ladite rondelle (1) est sensiblement plane et comporte au moins une ouverture (5) sensiblement radiale par rapport audit axe de rondelle (D) et délimitée par une première lèvre (51) et une deuxième lèvre (52) d'écartement à l'état libre inférieur à la plus petite dimension radiale de ladite tige (3, 30), l'une au moins desdites première lèvre (51) et une deuxième lèvre (52) étant une lèvre élastique, ladite ouverture (5) étant agencée pour autoriser une introduction ou une extraction axiale ou/et radiale, par rapport audit axe de tige (A), sous l'action d'un effort axial ou/et radial, par rapport audit axe de tige (A), de ladite rondelle (1) sur, ou respectivement de, une dite tige (3, 30).

3. Balancier d'horlogerie (2) selon la revendication 1, **caractérisée en ce que** ladite rondelle (1) est sensiblement plane et **en ce que** sa dite jupe (11) comporte une pluralité de fentes (9) sensiblement radiales par rapport audit axe de rondelle (D) et chacune de largeur très inférieure à la plus petite dimension radiale de ladite tige à relief de façon à s'opposer à toute introduction ou extraction radiale de ladite rondelle (1) par rapport audit axe de tige (A) sous l'action d'un effort radial ou axial par rapport audit axe de tige (A), ladite pluralité de fentes (9) étant agencée pour permettre une déformation élastique conique de ladite jupe (11) sous l'action d'un effort axial par rapport audit axe de tige (A), pour autoriser une introduction ou une extraction axiale, par rapport audit axe de tige (A), de ladite rondelle (1) sur, ou respectivement de, une dite tige (3, 30).

4. Balancier d'horlogerie (2) selon l'une des revendications 1 à 3, **caractérisée en ce que** ladite rondelle (1) est en matériau micro-usinable ou en silicium ou oxyde de silicium ou DLC.

5. Balancier d'horlogerie (2) selon la revendication 1, **caractérisée en ce que** ladite rondelle (1) est gauche et comporte au moins une spire ouverte (8) élastique s'enroulant autour dudit axe de rondelle (D) et agencée pour autoriser une introduction ou une extraction axiale, par rapport audit axe de tige (A), sous l'action d'un effort axial par rapport audit axe de tige (A),de ladite rondelle (1) sur, ou respectivement de, une dite tige (3, 30).

6. Balancier d'horlogerie (2) selon la revendication 5, **caractérisée en ce que** ladite au moins une spire ouverte (8) comporte une ouverture de spire (58) sensiblement radiale par rapport audit axe de rondelle (D) et délimitée par une première lèvre de spire (581) et une deuxième lèvre de spire (582) d'écartement à l'état libre inférieur à la plus petite dimension radiale de ladite tige (3, 30), l'une au moins desdites première lèvre de spire (581) et une deuxième lèvre de spire (582) étant une lèvre élastique, ladite ouverture de spire (58) étant agencée pour autoriser une introduction ou une extraction radiale, par rapport audit axe de tige (A), sous l'action d'un effort radial par rapport audit axe de tige (A), de ladite rondelle (1) sur, ou respectivement de, une dite tige (3, 30).

7. Balancier d'horlogerie (2) selon la revendication 1, **caractérisée en ce que** ladite rondelle (1) est gauche et **en ce que** sa dite jupe (11) est sensiblement de symétrie de révolution par rapport audit axe de rondelle (D) et comporte une pluralité de fentes (9) sensiblement radiales par rapport audit axe de rondelle (D) et chacune de largeur très inférieure à la plus petite dimension radiale de ladite tige (3, 30) de façon à s'opposer à toute introduction ou extraction radiale de ladite rondelle (1) par rapport audit axe de tige (A) sous l'action d'un effort radial ou axial par rapport audit axe de tige (A), ladite pluralité de fentes (9) étant agencée pour permettre une déformation élastique conique de ladite jupe (11) sous l'action d'un effort axial par rapport audit axe de tige (A), pour autoriser une introduction ou une extraction axiale, par rapport audit axe de tige (A), de ladite rondelle (1) sur, ou respectivement de, une dite tige (3, 30).

8. Balancier d'horlogerie (2) selon la revendication 1, **caractérisée en ce que** ladite rondelle (1) est gauche quand elle est prévue pour coopérer avec une dite tige (3, 30) qui est une tige à relief (3) filetée, selon un profil sensiblement hélicoïdal de même sens que ladite tige à relief (3) filetée, avec un pas différent de celui de ladite tige à relief (3) filetée et compris entre 0,80 et 1,20 fois la valeur du pas de ladite tige à relief (3) filetée.

9. Balancier d'horlogerie (2) selon l'une des revendications 1 à 8, **caractérisée en ce que** ledit orifice axial (10) est délimité latéralement par deux surfaces opposées (13 ; 14) qui, quand ladite rondelle (1) est prévue pour coopérer avec une dite tige (3, 30) qui est une tige à relief (3) filetée, définissent dans chaque plan passant par ledit axe de rondelle (D) un profil sensiblement complémentaire à celui de ladite tige à relief (3) filetée.

10. Balancier d'horlogerie (2) selon l'une des revendications 1 à 8, **caractérisée en ce que** ledit orifice axial (10) est un alésage axé sur ledit axe de rondelle (D) et est délimité latéralement par au moins deux surfaces opposées (12 ; 13 ; 14) qui sont perpendiculaires audit axe de rondelle (D).

11. Balancier d'horlogerie (2) selon la revendication 9 ou 10, **caractérisée en ce que** l'une au moins desdites surfaces opposées (12 ; 13 ; 14) est agencée pour exercer une friction sur ladite tige (3, 30), par un état de surface supérieur à 12 micromètres Ra ou par un traitement de surface particulier.

12. Balancier d'horlogerie (2) selon l'une des revendications 1 à 11, **caractérisée en ce que** ladite rondelle (1) comporte, sur au moins une surface latérale sensiblement orthogonale audit axe de rondelle (D), au moins un moyen d'entraînement ou un crantage agencé pour coopérer avec un moyen d'entraînement complémentaire ou un crantage complémentaire que comporte une autre rondelle (1) adjacente, pour un arrêt en pivotement par rapport à cette dernière.

13. Balancier d'horlogerie (2) selon l'une des revendications 1 à 12, **caractérisée en ce que** ledit orifice (10) que comporte ladite rondelle (1) pour entourer une dite tige (3, 30), est cranté, ou est cannelé, ou comporte un état de surface supérieur à 12 micromètres Ra, ou comporte un revêtement de friction avec un coefficient de friction avec l'acier supérieur à 0,4.

14. Balancier d'horlogerie (2) selon l'une des revendications 1 à 13, **caractérisée en ce que** ladite rondelle (1) a une masse inférieure à 50 µg.

15. Balancier d'horlogerie (2) selon l'une des revendications 1 à 14, **caractérisée en ce que** ladite rondelle (1) a une inertie propre par rapport audit axe de rondelle (D) inférieure à 2,5µg*mm².

16. Balancier d'horlogerie (2) selon l'une des revendications précédentes, **caractérisé en ce qu'**au moins une dite tige à relief (3) est une vis hélicoïdale.

17. Balancier d'horlogerie (2) selon l'une des revendications précédentes, **caractérisé en ce qu'**au moins une dite tige à relief (3) est un arbre annelé.

18. Balancier d'horlogerie (2) selon l'une des revendications précédentes, caractérisé en qu'il comporte, solidaire de sa serge (20) ou d'une masselotte (4) rapportée sur sa dite serge (20), au moins une tige lisse (30) qui comporte au moins une portée lisse (33, 34, 35, 36, 37, 38) agencée pour recevoir au moins une dite rondelle (1) adaptée à son profil et à ses dimensions.

19. Balancier d'horlogerie (2) selon l'une des revendications précédentes, caractérisé en qu'il comporte, solidaire de sa serge (20) ou d'une masselotte (4) rapportée sur sa dite serge (20), au moins une tige lisse (30) qui comporte au moins une pluralité de portées lisses (33, 34, 35, 36, 37, 38) étagées en diamètres et toutes agencées pour recevoir au moins une même dite rondelle (1).

20. Balancier d'horlogerie (2) selon l'une des revendications précédentes, caractérisé en qu'il comporte, solidaire de sa serge (20) ou d'une masselotte (4) rapportée sur sa dite serge (20), au moins une tige lisse (30) qui comporte au moins une pluralité de portées lisses (33, 34, 35) qui sont cylindriques et coaxiales.

21. Balancier d'horlogerie (2) selon l'une des revendications précédentes, caractérisé en qu'il comporte, solidaire de sa serge (20) ou d'une masselotte (4) rapportée sur sa dite serge (20), au moins une tige lisse (30) qui comporte au moins une pluralité de portées lisses (36, 37, 38) qui sont coniques et coaxiales.

22. Pièce d'horlogerie (100) comportant au moins un balancier d'horlogerie (2) selon l'une des revendications précédentes.

## Patentansprüche

1. Uhrenunruh (2), umfassend, fest verbunden mit ihrem Radkranz (20) oder einer an den Radkranz (20) angefügten Wirkmasse (4), mindestens zwei Stifte (3, 30), die ein Relief (3) aufweisen oder glatt (30) sind und sich längs einer Stiftachse (A) erstrecken, wobei die Stifte (3, 30) jeweils dafür ausgelegt sind, mindestens eine Ausgleichsscheibe (1) aufzunehmen, die an sein Profil und an seine Abmessungen angepasst ist, wobei die Ausgleichsscheibe (1) dafür ausgelegt ist, an einem Stift (3, 30) gehalten zu werden, wobei die Scheibe (1) eine im Wesentlichen ringförmige, elastische Scheibe um eine Öffnung (10) herum ist, die dafür ausgelegt ist, einen Stift (3, 30) mindestens teilweise zu umgeben, **dadurch gekennzeichnet, dass** die Scheibe mindestens eine elastische Schürze (11) aufweist, die dafür ausgelegt ist, ein Einbringen oder ein Entfernen der Scheibe (1) in Bezug auf einen Stift (3, 30) unter der Wirkung einer radialen und/oder axialen Kraft zuzulassen und ein Einrasthalten an dem Stift (3, 30) bei Abwesenheit einer Kraft auf die Scheibe (1) sicherzustellen, wobei die Scheibe (1) ein Mittel zum Greifen und/oder zum winkelmäßigen Verriegeln (6) an einem äußeren Stirnstoß (7), den diese Scheibe (1) aufweist, umfasst, wobei sich jeder der Stifte (3) mit Relief längs einer Stiftachse (A) erstreckt, die ein Gewinde aufweist oder gerillt ist oder eine Folge von Hohlprofilen (31) aufweist, die durch Scheitel (32) getrennt sind und sich diametral einerseits zwischen einem minimalen Durchmesser (DMIN) des Kerns und andererseits einem maximalen Durchmesser (DMAX) des Profilscheitels erstrecken, und jedes dafür ausgelegt ist, mindestens eine Scheibe (1) aufzunehmen, die an sein Profil und an seinen minimalen Durchmesser (DMIN) des Kerns und an seinen maximalen Durchmesser (DMAX) des Profilscheitels angepasst ist.

2. Uhrenunruh (2) nach Anspruch 1, **dadurch gekennzeichnet, dass** die Scheibe (1) im Wesentlichen eben ist und mindestens eine Öffnung (5) aufweist, die in Bezug auf die Scheibenachse (D) im Wesentlichen radial ist und im freien Zustand begrenzt ist durch einen ersten Rand (51) und einen zweiten Rand (52), dessen Abstand kleiner als die kleinste radiale Abmessung des Stifts (3, 30) sind, wobei der erste Rand (51) und/oder der zweite Rand (52) eine elastische Lippe sind, wobei die Öffnung (5) dafür ausgelegt ist, ein axiales und/oder radiales Einbringen oder Entfernen der Scheibe (1) in Bezug auf die Stiftachse (A) unter der Wirkung einer axialen und/oder radialen Kraft in Bezug auf die Stiftachse (A) auf den bzw. von dem Stift (3, 30) zuzulassen.

3. Uhrenunruh (2) nach Anspruch 1, **dadurch gekennzeichnet, dass** die Scheibe (1) im Wesentlichen eben ist und dass ihre Schürze (11) mehrere Schlitze (9) aufweist, die in Bezug auf die Scheibenachse (D) im Wesentlichen radial sind und jeweils eine Breite besitzen, die viel kleiner als die kleinste radiale Abmessung des Stifts mit Relief ist, derart, dass sie sich jedem radialen Einbringen oder Entfernen der Scheibe (1) in Bezug auf die Stiftachse (A) unter der Wirkung einer radialen oder axialen Kraft in Bezug auf die Stiftachse (A) widersetzen, wobei die mehreren Schlitze (9) dafür ausgelegt sind, eine konische elastische Verformung der Schürze (11) unter der Wirkung einer axialen Kraft in Bezug auf die Stiftachse (A) zu erlauben, um ein axiales Einbringen oder Entfernen der Scheibe (1) in Bezug auf die Stiftachse (A) auf den bzw. von dem Stift (3, 30) zuzulassen.

4. Uhrenunruh (2) nach einem der Ansprüche 1 bis 3, **dadurch gekennzeichnet, dass** die Scheibe (1) aus einem mikrobearbeitbaren Material oder aus Silicium oder Siliciumoxid oder aus DLC besteht.

5. Uhrenunruh (2) nach Anspruch 1, **dadurch gekennzeichnet, dass** die Scheibe (1) unflach ist und mindestens eine elastische offene Windung (8) aufweist, die um die Scheibenachse (D) gewickelt ist und dafür ausgelegt ist, ein axiales Einbringen oder Entfernen der Scheibe (1) in Bezug auf die Stiftachse (A) unter der Wirkung einer axialen Kraft in Bezug auf die Stiftachse (A) auf den bzw. von dem Stift (3, 30) zuzulassen.

6. Uhrenunruh (2) nach Anspruch 5, **dadurch gekennzeichnet, dass** die mindestens eine offene Windung (8) eine Windungsöffnung (58) aufweist, die in Bezug auf die Scheibenachse (D) im Wesentlichen radial ist und im freien Zustand begrenzt ist durch einen ersten Windungsrand (581) und einen zweiten Windungsrand (582), dessen Abstand kleiner als die kleinste radiale Abmessung des Stifts (3, 30) sind, wobei der erste Windungsrand (581) und/oder ein zweiter Windungsrand (582) eine elastische Lippe sind, wobei die Windungsöffnung (58) dafür ausgelegt ist, ein radiales Einbringen oder Entfernen der Scheibe (1) in Bezug auf die Stiftachse (A) unter der Wirkung einer radialen Kraft in Bezug auf die Stiftachse (A) auf den bzw. von dem Stift (3, 30) zuzulassen.

7. Uhrenunruh (2) nach Anspruch 1, **dadurch gekennzeichnet, dass** die Scheibe (1) unflach ist und dass ihre Schürze (11) in Bezug auf die Scheibenachse (D) im Wesentlichen rotationssymmetrisch ist und mehrere Schlitze (9) aufweist, die in Bezug auf die Scheibenachse (D) im Wesentlichen radial sind und jeweils eine Breite aufweisen, die viel kleiner als die kleinste radiale Abmessung des Stifts (3, 30) ist, derart, dass sie sich jedem radialen Einbringen oder Entfernen der Scheibe (1) in Bezug auf die Stiftachse (A) unter der Wirkung einer radialen oder axialen Kraft in Bezug auf die Stiftachse (A) widersetzen, wobei die mehreren Schlitze (9) dafür ausgelegt sind, eine konische elastische Verformung der Schürze (11) unter der Wirkung einer axialen Kraft in Bezug auf die Stiftachse (A) zu erlauben, um ein axiales Einbringen oder Entfernen der Scheibe (1) in Bezug auf die Stiftachse (A) auf den bzw. von dem Stift (3, 30) zuzulassen.

8. Uhrenunruh (2) nach Anspruch 1, **dadurch gekennzeichnet, dass** die Scheibe (1) unflach ist, wenn vorgesehen ist, dass sie mit einem Stift (3, 30), der ein Gewindestift mit Relief (3) ist, gemäß einem im Wesentlichen schraubenlinienförmigen Profil mit dem gleichen Richtungssinn wie der Gewindestift mit Relief (3) zusammenzuwirken, wobei die Steigung von jener des Gewindestifts mit Relief (3) verschieden ist und im Bereich des 0,80- bis 1,20-fachen Wertes der Steigung des Gewindestifts mit Relief (3) liegt.

9. Uhrenunruh (2) nach einem der Ansprüche 1 bis 8, **dadurch gekennzeichnet, dass** die axiale Öffnung (10) seitlich durch zwei gegenüberliegende Oberflächen (13; 14) begrenzt ist, die dann, wenn die Scheibe (1) dazu vorgesehen ist, mit einem Stift (3, 30), der ein Gewindestift mit Relief (3) ist, zusammenzuwirken, in jeder Ebene, die durch die Scheibenachse (D) verläuft, ein Profil definieren, das zu jenem des Gewindestifts mit Relief (3) im Wesentlichen komplementär ist.

10. Uhrenunruh (2) nach einem der Ansprüche 1 bis 8, **dadurch gekennzeichnet, dass** die axiale Öffnung (10) eine Bohrung mit einer auf die Scheibenachse (D) ausgerichteten Achse ist, die seitlich durch mindestens zwei gegenüberliegende Oberflächen (12; 13; 14) begrenzt ist, die zu der Scheibenachse (D) senkrecht sind.

11. Uhrenunruh (2) nach Anspruch 9 oder 10, **dadurch gekennzeichnet, dass** mindestens eine der gegenüberliegenden Oberflächen (12; 13; 14) dafür ausgelegt ist, auf den Stift (3, 30) durch eine Oberflächenbeschaffenheit, die größer als 12 Mikrometer Ra ist, oder durch eine besondere Oberflächenbehandlung eine Reibung auszuüben.

12. Uhrenunruh (2) nach einem der Ansprüche 1 bis 11, **dadurch gekennzeichnet, dass** die Scheibe (1) auf mindestens einer seitlichen Fläche, die zu der Scheibenachse (D) im Wesentlichen senkrecht ist, mindestens ein Antriebsmittel oder eine Einkerbung umfasst, das bzw. die dafür ausgelegt ist, mit einem komplementären Antriebsmittel bzw. mit einer komplementären Einkerbung, die eine andere, benachbarte Scheibe (1) aufweist, zusammenzuwirken, um eine Drehung in Bezug auf diese Letztere zu stoppen.

13. Uhrenunruh (2) nach einem der Ansprüche 1 bis 12, **dadurch gekennzeichnet, dass** die Öffnung (10), die die Scheibe (1) aufweist, damit sie einen Stift (3, 30) umgibt, gekerbt oder gerillt ist oder eine Oberflächenbeschaffenheit von mehr als 12 Mikrometer Ra aufweist oder eine Reibbeschichtung mit einem Reibkoeffizienten mit Stahl größer als 0,4 aufweist.

14. Uhrenunruh (2) nach einem der Ansprüche 1 bis 13, **dadurch gekennzeichnet, dass** die Scheibe (1) eine Masse von weniger als 50 µg besitzt.

15. Uhrenunruh (2) nach einem der Ansprüche 1 bis 14, **dadurch gekennzeichnet, dass** die Scheibe (1) eine Eigenträgheit in Bezug auf die Scheibenachse (D) von weniger als 2,5 µg x mm² besitzt.

16. Uhrenunruh (2) nach einem der vorhergehenden Ansprüche, **dadurch gekennzeichnet, dass** mindestens ein Reliefstift (3) eine archimedische Schraube ist.

17. Uhrenunruh (2) nach einem der vorhergehenden Ansprüche, **dadurch gekennzeichnet, dass** mindestens ein Reliefstift (3) eine gerillte Spindel ist.

18. Uhrenunruh (2) nach einem der vorhergehenden Ansprüche, **dadurch gekennzeichnet, dass** sie fest verbunden mit ihrem Radkranz (20) oder mit einer an den Radkranz (20) angefügten Wirkmasse (4) mindestens einen glatten Stift (30) umfasst, der mindestens einen glatten Bereich (33, 34, 35, 36, 37, 38) aufweist, der dafür ausgelegt ist, mindestens eine Scheibe (1) aufzunehmen, die an sein Profil und an seine Abmessungen angepasst ist.

19. Uhrenunruh (2) nach einem der vorhergehenden Ansprüche, **dadurch gekennzeichnet, dass** sie fest verbunden mit ihrem Radkranz (20) oder einer an ihren Radkranz (20) angefügten Wirkmasse (4) mindestens einen glatten Stift (30) umfasst, der mindestens mehrere glatte Bereiche (33, 34, 35, 36, 37, 38) aufweist, deren Durchmesser gestuft sind und die alle dafür ausgelegt sind, mindestens dieselbe Scheibe (1) aufzunehmen.

20. Uhrenunruh (2) nach einem der vorhergehenden Ansprüche, **dadurch gekennzeichnet, dass** sie fest verbunden mit ihrem Radkranz (20) oder mit einer an ihren Radkranz (20) angefügten Wirkmasse (4) mindestens einen glatten Stift (30) umfasst, der mindestens mehrere glatte Bereiche (33, 34, 35) aufweist, die zylindrisch und koaxial sind.

21. Uhrenunruh (2) nach einem der vorhergehenden Ansprüche, **dadurch gekennzeichnet, dass** sie fest verbunden mit ihrem Radkranz (20) oder mit einer an ihren Radkranz (20) angefügten Wirkmasse (4) mindestens einen glatten Stift (30) umfasst, der mindestens mehrere glatte Bereiche (36, 37, 38) aufweist, die konisch und koaxial sind.

22. Zeitmessgerät (100), umfassend mindestens eine Uhrenunruh (2) nach einem der vorhergehenden Ansprüche.

## Claims

1. Timepiece balance (2) comprising, integral with its rim (20) or with an inertia block (4) placed on its said rim (20), at least two arbors (3, 30), with relief (3) or smooth (30), extending along an arbor axis (A), wherein said arbors (3, 30) are each arranged to receive at least one poising-washer (1), adapted to the shape and to the dimensions thereof, said poising-washer (1) being arranged to be held on a said arbor (3, 30), said washer (1) being a substantially annular elastic washer around an opening (10) arranged to at least partially encircle a said arbor (3, 30), **characterized in that** said washer includes at least one elastic skirt (11) arranged to allow said washer (1) to be placed on or removed from a said arbor (3, 30) under a radial and/or axial load, and to resiliently hold said washer clipped on a said arbor (3, 30) in the absence of a load on said washer (1), and said washer (1) including a gripping and/or angular indexing means (6) on a peripheral edge (7) comprised in said washer (1), each of the relief arbors (3) extending along an arbor axis (A) being threaded or ringed or including a series of hollow sections (31) separated by apices (32), and extending diametrically between, on the one hand a minimum core diameter (DMIN) and on the other hand, a maximum apex diameter (DMAX), and each arranged to receive at least one said washer (1), adapted to the shape and to said minimum core diameter (DMIN) thereof and to said maximum high point diameter (DMAX) thereof.

2. Timepiece balance (2) according to claim 1, **characterized in that** said washer (1) is substantially plane and includes at least one substantially radial aperture (5) relative to said washer axis (D) and delimited by a first lip (51) and a second lip (52) whose spacing, in the free state, is smaller than the smallest radial dimension of said arbor (3, 30), at least one of said first lip (51) and a second lip (52) being an elastic lip, said aperture (5) being arranged to allow said washer (1) to be placed on or respectively removed from a said arbor (3, 30) axially and/or radially relative to said arbor axis (A), under an axial and/or radial load relative to said arbor axis (A).

3. Timepiece balance according to claim 1, **characterized in that** said washer (1) is substantially plane and **in that** its said skirt (11) includes a plurality of substantially radial slots (9) relative to said washer axis (D), each of much smaller width than the smallest radial dimension of said relief arbor in order to resist said washer (1) being placed or removed radially relative to said arbor axis (A) under a radial or axial load relative to said arbor axis (A), said plurality of slots (9) being arranged to allow a conical elastic deformation of said skirt (11) under an axial load relative to said arbor axis (A), to allow said washer (1) to be placed on or respectively removed from a said arbor (3, 30) axially relative to said arbor axis (A).

4. Timepiece balance (2) according to any of claims 1 to 3, **characterized in that** said washer (1) is made of micromachinable material or silicon or silicon oxide or DLC.

5. Timepiece balance (2) according to claim 1, **characterized in that** said washer (1) is twisted and includes at least one open elastic coil (8) wound around said washer axis (D) and arranged to allow said washer (1) to be placed on or respectively removed from a said arbor (3, 30) axially relative to said arbor axis (A), under an axial load relative to said arbor axis (A).

6. Timepiece balance (2) according to claim 5, **characterized in that** said at least one open coil (8) includes a substantially radial coil aperture (58) relative to said washer axis (D) and delimited by a first coil lip (581) and a second coil lip (582) whose spacing, in the free state, is smaller than the smallest radial dimension of said arbor (3, 30), at least one of said first coil lip (58) and a second coil lip (582) being an elastic lip, said coil aperture (58) being arranged to allow said washer (1) to be placed on or respectively removed from a said arbor (3, 30) radially relative to said arbor axis (A), under a radial load relative to said arbor axis (A).

7. Timepiece balance (2) according to claim 1, **characterized in that** said washer (1) is twisted and **in that** its said skirt (11) has substantially rotational symmetry relative to said washer axis (D) and includes a plurality of substantially radial slots (9) relative to said washer axis (D), each of much smaller width than the smallest radial dimension of said arbor (3, 30) so as to resist said washer (1) being placed or removed radially relative to said arbor axis (A) under a radial or axial load relative to said arbor axis (A), said plurality of slots (9) being arranged to allow a conical elastic deformation of said skirt (11) under an axial load relative to said arbor axis (A) to allow said washer (1) to be placed on or respectively removed from a said arbor (3, 30) axially relative to said arbor axis (A).

8. Timepiece balance (2) according to claim 1, **characterized in that** said washer (1) is twisted when it is arranged to cooperate with a said arbor (3, 30) which is a threaded relief arbor (3), according to a substantially helical shape in the same direction as said threaded relief arbor (3), with a different pitch from that of said threaded relief arbor (3) and comprised between 0.80 and 1.20 times the value of the pitch of said flexible relief arbor (3).

9. Timepiece balance (2) according to any of claims 1 to 8, **characterized in that** said axial opening (10) is delimited laterally by two opposite surfaces (13; 14) which, when said washer (1) is arranged to cooperate with a said arbor (3, 30) which is a threaded relief arbor (3), define in each plane through said washer axis (D) a substantially complementary profile to that of said threaded relief arbor (3).

10. Timepiece balance (2) according to any of claims 1 to 8, **characterized in that** said axial opening (10) is a bore centred on said washer axis (D) and is delimited laterally by at least two opposite surfaces (12; 13; 14) which are perpendicular to said washer axis (D).

11. Timepiece balance (2) according to claim 9 or 10, **characterized in that** at least one of said opposite surfaces (12; 13; 14) is arranged to apply friction onto said arbor (3, 30) by a surface roughness of more than 12 micrometres Ra or by a particular surface treatment.

12. Timepiece balance (2) according to any of claims 1 to 11, **characterized in that** said washer (1) includes, on at least one lateral surface substantially orthogonal to said washer axis (D), at least one drive means or one notch system arranged to cooperate with a complementary drive means or a complementary notch system comprised in another adjacent washer (1), for stopping pivoting with respect to the latter.

13. Timepiece balance (2) according to any of claims 1 to 12, **characterized in that** said opening (10) in said washer (1) for encircling a said arbor (3, 30) is notched, or is grooved, or has a surface roughness of more than 12 micrometres Ra, or has a friction coating with a coefficient of friction with steel greater than 0.4.

14. Timepiece balance (2) according to any of claims 1 to 13, **characterized in that** said washer (1) has a mass less than 50 µg.

15. Timepiece balance (2) according to any of claims 1 to 14, **characterized in that** said washer (1) has its own inertia relative to said washer axis (D) less than 2.5 ug*mm².

16. Timepiece balance (2) according to any of the preceding claims, **characterized in that** at least one said relief arbor (3) is a helical screw.

17. Timepiece balance (2) according to any of the preceding claims, **characterized in that** at least one said relief arbor (3) is a ringed arbor.

18. Timepiece balance (2) according to any of the preceding claims, **characterized in that** the balance comprises, integral with its rim (20) or with an inertia block (4) placed on its said rim (20), at least one smooth arbor (30) which includes at least one smooth shoulder (33, 34, 35, 36, 37, 38) arranged to receive at least one said washer (1) adapted to its shape and to its dimensions.

19. Timepiece balance (2) according to any of the preceding claims, **characterized in that** the balance comprises, integral with its rim (20) or with an inertia block (4) placed on its said rim (20), at least one smooth arbor (30) which includes at least one plurality of smooth shoulders (33, 34, 35, 36, 37, 38) with stepped diameters and all arranged to receive at least one same said washer (1).

20. Timepiece balance (2) according to any of the preceding claims, **characterized in that** the balance includes, integral with its rim (20) or with an inertia block (4) placed on its said rim (20), at least one smooth arbor (30) which includes at least one plurality of smooth shoulders (33, 34, 35) which are cylindrical and coaxial.

21. Timepiece balance (2) according to any of the preceding claims, **characterized in that** the balance includes, integral with its rim (20) or with an inertia block (4) placed on its said rim (20), at least one smooth arbor (30) which includes at least one plurality of smooth shoulders (36, 37, 38) which are conical and coaxial.

22. Timepiece (100) including at least one timepiece balance (2) according to any of the preceding claims.
